# EUROPEAN PATENT APPLICATION

(11) **EP 1 643 278 A1**
(43) Date of publication of application: **05.04.2006**
(21) Application number: 05020877.6
(22) Date of filing: 26.09.2005
(51) Int. Cl.: G02B 6/00

(54) **Spread illuminating apparatus having two light conductive plates**

(30) Priority: 29.09.2004 JP 2004284290
(71) Applicant: MINEBEA Co., Ltd., Kitasaku-gun, Nagano-ken (JP)
(72) Inventor: Kunimochi, Toru, Fukuroi-shi, Shizuoka-ken (JP)
(74) Representative: Schaad, Balass, Menzl & Partner AG

(57) **Abstract**

A spread illuminating apparatus (1) is provided that includes two light conductive plates (2,3). Each light conductive plate has point light sources (4,5,6) having respective different emission wavelengths and disposed at one side surface (2a,3a) thereof. Since a light exiting mechanism (17,20) is formed at a region in one major surface (2d,3d) of the light conductive plate located apart from the light sources, lights emitted from the light sources (4,5,6) into the light conductive plate are adapted to exit out mostly from a region in the other major surface (2c,3c) located apart from the light sources. The lights are allowed to be well mixed with one another before exiting out the light conductive plate, thus preventing the color heterogeneity and coloration problem. When the two light conductive plates are stacked together such that their respective one side surfaces (2a,3a) are oppositely located apart from each other, white light is achieved entirely across the light conductive plate.

## Description

### BACKGROUND OF THE INVENTION

### 1. Field of the Invention

The present invention relates to a side light type spread illuminating apparatus employing, as primary light sources, a plurality of light emitting diodes (LEDs) with respective different colors, such as red (R), green (G), and blue (B).

### 2. Description of the Related Art

A side light type spread illuminating apparatus in which a white LED is disposed at a side of a light conductive plate is typically used in a liquid crystal display (LCD) apparatus for a mobile terminal device. The white LED is a wavelength conversion type LED (one-chip type LED) coupling a blue LED and a yellow fluorescent substance and is small in size and low in power consumption (refer to Japanese Patent Application Laid-Open No. H10-242513).

The white LED has a problem with color rendering properties (refer to, for example, paragraph [0007] of Japanese Patent Application Laid-Open No. 2002-43633). The white LED has another problem that a white point varies largely depending on a fluorescent material (refer to, for example, paragraph [0005] of Japanese Patent Application Laid-Open No. 2003-58125). In face of the above-described problems of the white LED, it is proposed to use a full color LED (RGB-LED) which is adapted to achieve a white light by combining an R-LED to emit a red light, a G-LED to emit a green light, and a B-LED to emit a blue light.

In the LCD apparatus, conventionally, micro color filters of red, green, and blue colors are provided for each of pixels in liquid crystal cells, and the transmittance of each pixel is controlled by a crystal liquid (micro color filter method). The micro color filter method, however, has such a problem that the color filter still has not come up with a desired spectroscopic characteristic, and only one third of the light amount emitted from a spread illuminating apparatus is utilized (refer to, for example, paragraphs [0002] and [0003] of Japanese Patent Application Laid-Open No. H11-14988, and paragraph [0003] of Japanese Patent Application Laid-Open No. 2003-330017).

To deal with the above-described problem of the micro color filter method, a sequential color illumination method (field sequential method) is disclosed which, without using micro color filters on each pixel, sequentially shows images of three colors by means of one pixel (refer to, for example, paragraph [0004] of the aforementioned Japanese Patent Application Laid-Open No. 2003-330017). In order to put the field sequential method into practice, a spread illuminating apparatus is required that independently controls and supplies red, green, and blue lights. This raises a demand for a spread illuminating apparatus that employs, as a primary light source, a full color LED composed of a combination of an R-LED, a G-LED, and B-LED.

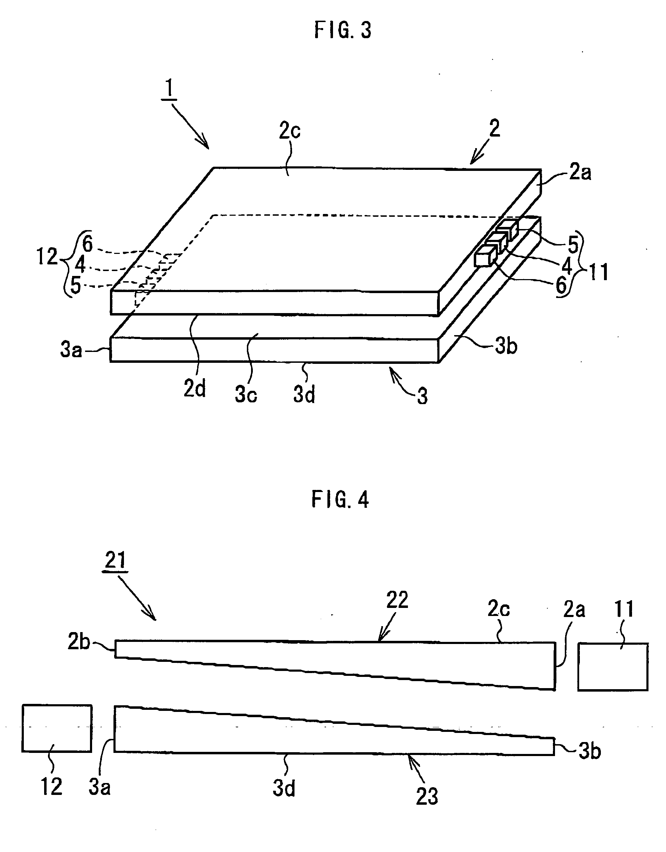

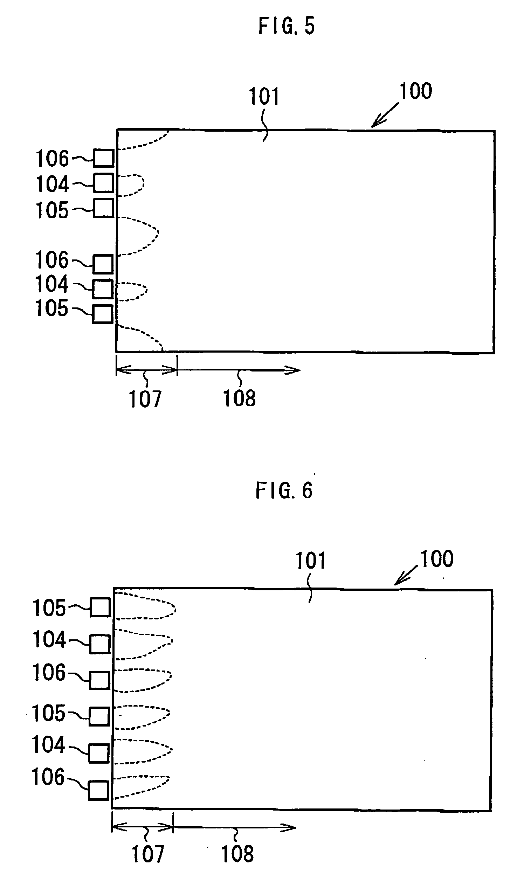

If the R-LED, the G-LED, and the B-LED are disposed individually at a side of a light conductive plate, lights, which are emitted from respective LEDs and enter the light conductive plate, exit out without duly getting mixed with one another at a region of the light conductive plate close to the side with the LEDs, which causes a problem of color heterogeneity and coloration (refer to, for example, pp. 170 to 174 and Fig. 4 in Flat Panel Display 2004 "Practical Edition" by Nikkei Microdevices, issued by Nikkei Business Publications, Inc. on December 26, 2003). Figs. 5 and 6 are schematic views of explaining generation of color heterogeneity and coloration in two conventional spread illuminating apparatuses with different LED arrangements. Referring to Figs. 5 and 6, an R-LED 104, a G-LED 105, and a B-LED 106 are disposed individually at a side surface of a light conductive plate 101 of a spread illuminating apparatus 100, and lights emitted from respective LEDs 104, 105 and 106 are not well mixed at an region (insufficient mix region) 107 covered by a certain distance from the side surface with the LEDs 104, 105 and 106 thus causing the color heterogeneity and coloration problem, while the lights are duly mixed at a region (white-light region) 108 beyond the insufficient mix region 107 thus achieving a white light. The distance covering the insufficient mix region 107 depends on the arrangement interval of the LEDs 104, 105 and 106, and will be about 30 mm if the interval between the LEDs 104, 105 and 106 is set, for example, at 10 mm (average).

In order to deal with the color heterogeneity and coloration problem, three solutions are proposed: (a) a plurality of light emitting chips are arranged close to one another (refer to, for example, Japanese Patent Application Laid-Open No. H10-2147411; (b) a plurality of LEDs are stacked on one another in the thickness direction of a light conductive plate (refer to, for example, Japanese Patent Application Laid-Open No. H11-353920); and (c) a plurality of LEDs are disposed at a corner of a light conductive plate (refer to, for example, Japanese Patent Application Laid-Open No. 2001-319514).

With regard to the proposed solution (a), it is difficult to commercially procure high-output LEDs. With regard to the solution (b), though a region suffering the color heterogeneity can be reduced, a region suffering uneven brightness distribution remains to exist (non-utilized region), and the stacking dimension of the LEDs constitutes the thickness dimension of the apparatus making it difficult to achieve a low-profile structure (for example, three LEDs for R, G and B make the thickness dimension trebled). And, with regard to the solution (c), only a limited number of LEDs can be disposed at the corner of the light conductive plate, and also downsizing of the apparatus is restricted due to a non utilized region generated in the light conductive plate.

### SUMMARY OF THE INVENTION

The present invention has been made in the light of the circumstances described above, and it is an object of the present invention to provide a spread illuminating apparatus which employs a plurality of point light sources having respective emission wavelengths different from one another, and which still is free from the color heterogeneity problem while enabling downsizing.

In order to achieve the object described above, according to an aspect of the present invention, a spread illuminating apparatus includes two light conductive plates: each of which defines a first side surface and a second side surface located opposite to the first side surface, and defines a first major surface and a second major surface; each of which has a plurality of point light sources having respective different emission wavelengths and disposed at the first side surface; each of which includes a light exiting mechanism formed at least on the second major surface; and which are stacked together in the thickness direction such that respective first side surfaces are oppositely located apart from each other so as to sandwich the two light conductive plates, and in the spread illuminating apparatus described above, lights emitted from the point light sources and introduced into the light conductive plate are adapted to exit out mainly from a region in the first major surface located toward the second side surface.

In the aspect of the present invention, the light exiting mechanism may cover a region in the second major surface located toward the second side surface.

In the aspect of the present invention, the distance from the first side surface of the light conductive plate to the region covered by the light exiting mechanism may measure ranging from 10 mm up to one half of the side-to-side dimension of the light conductive plate.

In the aspect of the present invention, each of the two light conductive plates may have its thickness decreasing from the one side surface toward the other side surface.

Accordingly, the lights emitted from the point light sources and introduced into each of the two light conductive plates are well mixed before exiting out from the light conductive plate, and when the two light conductive plates are stacked together, white light resulting from the sufficient mixture of the lights from the point light sources is achieved entirely across the light conductive plate placed atop, thus eliminating the color heterogeneity and coloration problem. And, if the light conductive plate is configured such that the thickness decreases from the first side surface to the second side surface, then the above-described advantage can be achieved with no substantial increase in dimension.

### BRIEF DESCRIPTION OF THE DRAWINGS

Fig. 1 is a schematic front view of a spread illuminating apparatus according to a first embodiment of the present invention;
Fig. 2 is a plan view of the spread illuminating apparatus of Fig. 1;
Fig. 3 is a perspective view of the spread illuminating apparatus of Fig. 1;
Fig. 4 is a schematic front view of a spread illuminating apparatus according to a second embodiment of the present invention;
Fig. 5 is a schematic plan view of a conventional spread illuminating apparatus, explaining generation of color heterogeneity and coloration; and
Fig. 6 is a schematic plan view of another conventional spread illuminating, explaining generation of color heterogeneity and coloration.

### DETAILED DESCRIPTION OF THE PREFERRED EMBODIMENTS

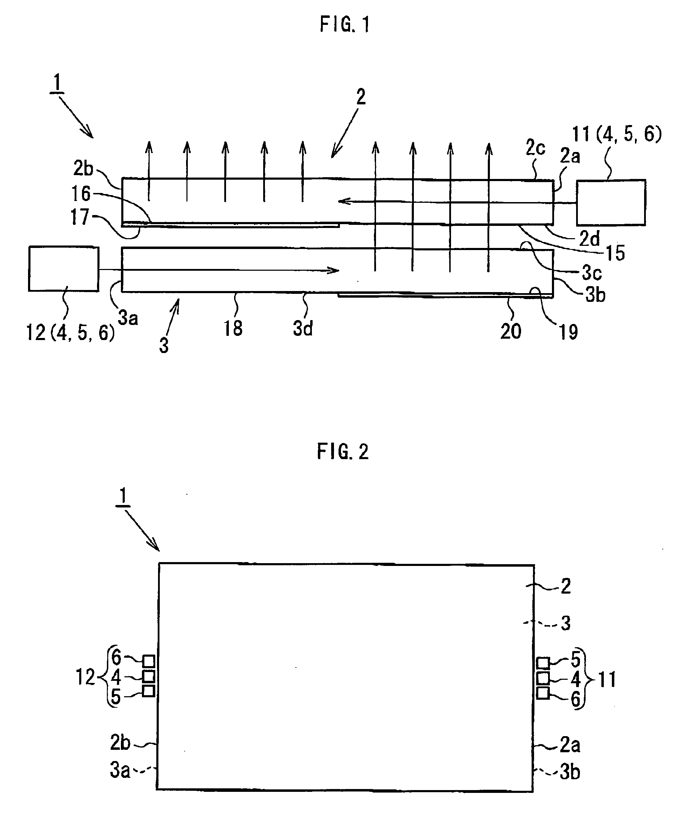

A first embodiment of the present invention will hereinafter be described with reference to Figs. 1 to 3.

Referring to Figs. 1 to 3, a spread illuminating apparatus 1 according to the first embodiment includes two light conductive plates (specifically, a first light conductive plate 2, and a second light conductive plate 3) substantially identical in configuration with each other.

A first RGB-LED unit 11, which includes a plurality (three in the present embodiment) of point light sources having respective different emission wavelengths (specifically, an R-LED 4 to emit a red light, a G-LED 5 to emit a green light, and a B-LED 6 to emit a blue light), is disposed at a first side surface 2a (right side in the figures) of the first light conductive plate 2. The first light conductive plate 2 defines a second other side surface 2b opposite to the first side surface 2a.

A second RGB-LED unit 12 structured identically with the first RGB-LED unit 11 is disposed at a first side surface 3a (left side in the figures) of the second light conductive plate 3. The second light conductive plate 3 defines a second side surface 3b opposite to the first side surface 3a.

The first light conductive plate 2 is placed on the second light conductive plate 3 such that the first side surface 2a and the second side surface 2b of the first light conductive plate 2 are aligned respectively to the second side surface 3b and the first side surface 3b of the second light conductive plate 3, whereby the first RGB-LED unit 11 and the second RBG-LED unit 12 are oppositely positioned apart from each other so as to sandwich the first and second light conductive plates 2 and 3 therebetween.

The first light conductive plate 2 defines two major surfaces (specifically, an upper major surface 2c, and a lower major surface 2d), and the second light conductive plate 3 defines two major surfaces (specifically, an upper major surface 3c, and a lower major surface 3d).

The lower major surface 2d of the first light conductive plate 2 is divided into two regions: a first side region 15 positioned toward the first side surface 2a; and a second side region 16 positioned toward the second side surface 2b. In Fig. 1, the border between the first side region 15 and the second side region 16 is located approximately at the halfway line of the first light conductive plate 2, but the border may alternatively be located closer to the first side surface 2a. An experimental result shows that if the border is set between a location10 mm apart from the first side surface 2a and the halfway line of the first light conductive plate 2, color heterogeneity and coloration can be well suppressed. In this connection, the border may be provided with a transition region where the density of an area of a light exiting mechanism (to be described below) varies continuously

A heretofore known light exiting mechanism 17 (hereinafter referred to as a first light exiting mechanism) adapted to scatteringly reflect light is formed at the second side region 16 in the lower major surface 2d of the first light conductive plate 2 so that light emitted from the first RGB-LED unit 11 and introduced into the first light conductive plate 2 is made to efficiently and uniformly exit out from the region in the upper major surface 2c opposite to the second side region 16, and though not illustrated in Fig. 1, an additional light exiting mechanism adapted to refractively transmit light may optionally be formed at a region in the upper major surface 2c located opposite to the second side region 16 so as to allow the light from the first RGB-LED unit 11 to exit out in a further efficient and uniform manner. On the other hand, no light exiting mechanism is formed at the first side region 15 in the lower major surface 2d or at a region in the upper major surface 2c located opposite to the first side region 15, so that the light emitted from the first RGB-LED unit 11 into the first light conductive plate 2 is maximally kept from exiting out from the region in the upper major surface 2c opposite to the one side region 15.

The first light exiting mechanism 17 or the additional one has effect of preventing the first light conductive plate 2 from sticking to optical components disposed adjacent thereto, and in order to apply such an effect a light exiting mechanism may be formed at the first side region 15 in the lower major surface 2d and/or at a region in the upper major surface 2c located opposite to the first side region 15 to such an extent and in such a manner as to keep off the color heterogeneity and coloration problem. This does not represent departure from the spirit and scope of the present invention.

The lower major surface 3d of the second light conductive plate 3, like the lower major surface 2d of the first light conductive plate 2, is divided into two regions: a first side region 18 positioned toward the first side surface 3a; and a second side region 19 positioned toward the second side surface 3b. A light exiting mechanism 20 (hereinafter referred to as a second light exiting mechanism) adapted to scatteringly reflect light is formed at the second side region 19 in the lower major surface 3d of the second light conductive plate 3 so that light emitted from the second RGB-LED unit 12 and introduced into the second light conductive plate 3 is made to efficiently and uniformly exit out from the region in the upper major surface 3c opposite to the second side region 19, and though not illustrated in Fig. 1, an additional light exiting mechanism adapted to refractively transmit light may optionally be formed at a region in the upper major surface 3c located opposite to the second side region 19 so as to allow the light from the second RGB-LED unit 12 to exit out in a further efficient and uniform manner. The light thus exiting out from the second light conductive plate 3 enters the first light conductive plate 2 from the first side region 15 and exits out from the region in the upper major surface 2c opposite to the first side region 15. No light exiting mechanism is formed at the first side region 18 in the lower major surface 3d or at a region in the upper major surface 3c located opposite to the first side region 18, so that the light emitted from the second RGB-LED unit 12 into the second light conductive plate 3 is maximally kept from exiting out from the region in the upper major surface 3c opposite to the first side region 18.

As described above, the light emitted from the first RGB-LED unit 11 and introduced into the first light conductive plate 2 exits out mostly from the region in the upper major surface 2c positioned opposite to the second side region 16 in the lower major surface 2d, i.e., from the region located apart from the first RGB-LED unit 11 while scarcely exiting out from the region in the upper major surface 2c located close to the first RGB-LED unit 11, as a result of which respective lights emitted from the R-LED4, the G-LED 5, and the B-LED 6 of the first RGB-LED unit 11 are allowed to be well mixed with one another before exiting out from the first light conductive plate 2, thus preventing the color heterogeneity and coloration problem conventionally incurred, and the light emitted from the second RGB-LED unit 12 and introduced into the second light conductive plate 3 exits out mostly from the region in the upper major surface 3c positioned opposite to the second side region 19 in the lower major surface 3d, i.e., from the region located apart from the second RGB-LED unit 12 while scarcely exiting out from the region in the upper major surface 3c located close to the second RGB-LED unit 12, as a result of which respective lights emitted from the R-LED 4, the G-LED 5, and the B·LED 6 of the second RGB-LED unit 12 are allowed to be well mixed with one another before exiting out from the second light conductive plate 3, thus preventing the color heterogeneity and coloration problem conventionally incurred.

As described above, in the spread illuminating apparatus 1 according to the first embodiment of the present invention, the color heterogeneity and coloration problem is eliminated with a simple structure, and a white light resulting from R, G, and B lights sufficiently mixed is achieved entirely across the upper major surface 2c of the first light conductive plate 2.

In the first embodiment described above, the R-LED 4, the G-LED 5, and the B-LED 6 as point light sources are used, but the present invention is not limited to this arrangement, and any two LEDs thereof or other color LEDs may be used. Also, other point light sources than LEDs may be used, and the number of point light sources is not specifically limited.

A second embodiment of the present invention will hereinafter be described with reference to Fig. 4. According to Fig. 4, in a spread illuminating apparatus 21 according to the second embodiment, a first light conductive plate 22 has its thickness decreasing from a first side surface 2a (with a first RGB-LED unit 11) toward a second side surface 2b, and a second light conductive plate 23 has its thickness decreasing from a first side surface 3a (with a second RGB-LED unit 12) toward a second side surface 3b, while the first and second light conductive plates 2 and 3 of the spread illuminating apparatus 1 according to the first embodiment have a constant thickness. In the spread illuminating apparatus 21 structured as described above; the total thickness can be reduced so as to be nearly as small as that of a spread illuminating apparatus having one light conductive plate with one white LED, and still the above-described advantages achieved in the spread illuminating apparatus 1 according to the first embodiment can be duly achieved.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. A spread illuminating apparatus (1) comprising two light conductive plates (2 and 3): each of which defines a first side surface (2a/3a) and a second side surface (2b/3b) located opposite to the first side surface (2a/3a), and defines a first major surface (2c/3c) and a second major surface (2d/3d); each of which has a plurality of point light sources (4, 5 and 6) having respective different emission wavelengths and disposed at the first side surface (2a/3a); each of which includes a light exiting mechanism (17/20) formed at least on the second major surface (2d/3d); and which are stacked together in a thickness direction such that respective first side surfaces (2a and 3a) are oppositely located apart from each other so as to sandwich the two light conductive plates (2 and 3), wherein lights emitted from the point light sources (4, 5 and 6) and introduced into the light conductive plate (2/3) exit out mainly from a region in the first major surface (2c/3c) located toward the second side surface (2b/3b).

2. A spread illuminating apparatus (1) according to Claim 1, wherein the light exiting mechanism (17/20) covers a region (16/19) in the second major surface (2d/3d) located toward the second side surface (2b/3b).

3. A spread illuminating apparatus (1) according to Claim 2, wherein a distance from the first side surface (2a/3a) of the light conductive plate (2/3) to the region (16/19) covered by the light exiting mechanism (17/20) measures ranging from 10 mm up to one half of a side-to-side dimension of the light conductive plate (2/3).

4. A spread illuminating apparatus (21) according to any one of Claims 1 to 3, wherein each of the two light conductive plates (2 and 3) has a thickness thereof decreasing from the first side surface (2a/3a) toward the second side surface (2b/3b).
